# EUROPÄISCHE PATENTSCHRIFT

(11) **EP 2 255 108 B1**
(45) Veröffentlichungstag und Bekanntmachung des Hinweises auf die Patenterteilung: **23.10.2013**
(21) Anmeldenummer: 09716479.2
(22) Anmeldetag: 25.02.2009
(51) Int. Cl.: F16H 57/01, F16H 57/02, F16H 57/031, F16H 57/04, F16H 59/16

(54) **SYSTEM MIT GETRIEBE**
SYSTEM HAVING A TRANSMISSION
SYSTÈME COMPORTANT UN ENGRENAGE

(30) Priorität: 06.03.2008 DE 102008013059
(43) Veröffentlichungstag der Anmeldung: 01.12.2010
(73) Patentinhaber: SEW-Eurodrive GmbH & Co, 76646 Bruchsal (DE)
(72) Erfinder: BADER, Antonius, 76646 Bruchsal (DE)
(74) Vertreter: Tüngler, Eberhard
(86) Internationale Anmeldenummer: PCT/EP2009/001347
(87) Internationale Veröffentlichungsnummer: WO 2009/109320

(56) Entgegenhaltungen:
- EP-A- 1 582 776
- EP-A2- 1 203 903
- DE-A1-102005 053 772
- JP-A- 2004 060 823
- JP-A- 2005 304 252
- US-A- 5 487 318
- US-A1- 2002 121 401
- US-B1- 6 530 856

## Beschreibung

Die Erfindung betrifft ein System mit Getriebe.

Es ist bekannt, dass Getriebe zum Montieren eines Endrades eine Ausnehmung an einem Gehäuseteil umfassen, die von einem Gehäusedeckel abdeckbar ist.

Aus der gattungsbildenden EP 1 582 776 A1 ist ein System mit Getriebe bekannt, wobei das Getriebe einen Gehäusedeckel umfasst, wobei an dem Gehäusedeckel eine Sensoreinheit vorgesehen ist, an der Sensoren vorgesehen sind, wobei dte Sensoren zumindest elektrisch mit einer Auswerteeinheit verbunden sind.

Aus der DE 10 2005 053 772 A1 ist eine Öldruck- oder Öldurchfluss-Messung bei einer Ölpumpe, die an ein Getriebe anmontiert ist, bekannt

Der Erfindung liegt daher die Aufgabe zugrunde, die Sicherheit bei Anlagen zu verbessern.

Erfindungsgemäß wird die Aufgabe bei dem System mit Getriebe nach den in Anspruch 1 angegebenen Merkmalen gelöst.

Wichtige Merkmale der Erfindung bei dem System mit Getriebe sind, dass das Getriebe zumindest einen Gehäusedeckel umfasst,
wobei am Gehäusedeckel eine Sensoreinheit vorgesehen ist, an der Sensoren vorgesehen sind,
wobei die Sensoren zumindest elektrisch mit einer Auswerteeinheit verbunden sind.

Von Vorteil ist dabei, dass der Gehäusedeckel mittels der Sensoreinheit schnell und einfach mit hoher Funktionalität ausstattbar ist. Somit ist ein in einer Anlage eingebautes Getriebe in verschiedenen Optionen verwendbar, wenn der einfache Gehäusedeckel mit bloßer Verschlussfunktion ausgetauscht wird gegen einen erfindungsgemäßen Gehäusedeckel, welcher mit der Sensoreinheit verbunden ist. Auf diese Weise ist eine hohe Varianz an Getrieben herstellbar bei gleichzeitiger möglichst kleiner Anzahl von Teilen. Mittels der Sensoreinheit sind Werte von physikalischen Größen des Getriebes erfassbar und somit diese Werte überwachbar. Auf diese Weise ist somit die Sicherheit in der das Getriebe umfassenden Anlage erhöhbar.

Bei einer vorteilhaften Ausgestaltung deckt der Gehäusedeckel eine Ausnehmung im Gehäuse oder zumindest einem Gehäuseteil des Getriebes ab. Von Vorteil ist dabei, dass einerseits Werte von Größen erfassbar sind und andererseits auch die Verschlussfunktion gewährleistbar ist. Somit weist der Gehäusedeckel zusätzliche Funktionen auf.

Die Sensoreinheit/ umfasst Aufnahmen für Sensoren.

Von Vorteil ist dabei, dass die Sensoren in der Sensoreinheit aufnehmbar sind und dann als Einheit schnell und einfach mit dem Gehäusedeckel und/oder der Auswerteeinheit verbindbar sind.

Bei einer vorteilhaften Ausgestaltung die Sensoreinheit ist an der der Umgebung zugewandten Seite des Gehäusedeckels mit diesem verbunden ist oder die Sensoreinheit mit dem Gehäusedeckel einstückig ausgebildet. Von Vorteil ist bei der einstückigen Ausbildung, dass weniger Schnittstellen und somit geringerer Herstellaufwand und weniger Dichtprobleme auftreten. An der Außenseite ist die Sensoreinheit besonders leicht zugänglich.

Bei einer vorteilhaften Ausgestaltung ist der Gehäusedeckel aus Metall und/oder die Sensoreinheit aus einem anderen Metall, oder aus Kunststoff ausgebildet. Von Vorteil ist bei der metallischen Ausführung, dass eine Abschirmung gegen elektromagnetische Einstrahlung und eine hohe mechanische Stabilität vorsehbar ist. Die Ausführung aus Kunststoff vereinfacht die Herstellung und verringert die Kosten und die Masse des Getriebes.

Die Auswerteeinheit ist mit der Sensoreinheit verbunden, insbesondere auf der der Umgebung zugewandten Seite der Sensoreinheit und/oder die Auswerteeinheit mit der Sensoreinheit einstückig ausgebildet ist. Von Vorteil ist dabei, dass eine robuste Bauweise erreichbar ist und die Montage schnell und einfach ausführbar ist.

Der erste Sensor ist ein Schwingungsensor, insbesondere zur Detektion von von Lagern und/oder Verzahnungsteilen erzeugtem Körperschall. Von Vorteil ist dabei, dass eine Überwachung auf Verschleiß von Lagern und Verzahnungsteilen ermöglicht ist.

Bei einer vorteilhaften Ausgestaltung ist ein weiterer Sensor ein Induktiv-Näherungssensor, insbesondere zur Bestimmung der Drehung eines Verzahnungsteils. Von Vorteil ist dabei, dass der Sensor auf die Verzahnung gerichtet ist. Somit ist ein Teil der Verzahnung im empfindlichen Bereich des Sensors, wodurch die Bewegung der Verzahnung Veränderungen im Sensorsignal hervorruft, aus denen dann die Drehzahl bestimmbar ist.

Bei einer vorteilhaften Ausgestaltung ist ein weiterer Sensor ein Ölzustandssensor, insbesondere als Infrarotsensor ausgeführt, insbesondere zur Bestimmung des Zustandes, insbesondere des Alters, des Schmieröls des Getriebes. Von Vorteil ist dabei, dass der Ölzustand berührungslos erfassbar ist.

Bei einer vorteilhaften Ausgestaltung ist ein weiterer Sensor ein Drehmomentsensor, insbesondere als OFW oder DMS-Sensor ausgeführt, insbesondere zur Bestimmung des mittels einer Welle des Getriebes durchgeleiteten Drehmoments. Von Vorteil ist dabei, dass das Drehmoment direkt und nicht nur indirekt über den umrichterversorgten antreibenden Elektromotor bestimmbarist.

Bei einer vorteilhaften Ausgestaltung ist ein weiterer Sensor als Ölstandsensor ausgebildet. Von Vorteil ist dabei, dass der Ölstand zusätzlich bestimmbar ist, insbesondere abhängig vom Betriebszustand. Somit ist eine Leckage erkennbar.

Bei einer vorteilhaften Ausgestaltung Ist ein weiterer Sensor vorgesehen, der eine Verschiebung einer Komponente des Getriebes bestimmt. Von Vorteil ist dabei, dass ein Lagerschaden oder dergleichen in einfacher Weise erkennbar ist, insbesondere wenn die Korrelation des Sensorsignals mit dem Signal eines Drehzahlsonsors gebildet und überwacht wird.

Bei einer vorteilhaften Ausgestaltung umfasst die Auswerteeinheit einen Zeitgeber, insbesondere Schwingquartz. Von Vorteil ist dabei, dass Werte der Drehgeschwindigkeit bestimmbar sind aus den von der bewegten Verzahnung detektierten Impulsen des Verzahnungsteils.

Bei einer vorteilhaften Ausgestaltung ist die Auswerteeinheit mit der Sensoreinheit einstückig ausgebildet. Von Vorteil ist dabei, dass eine kompakte robuste Einheit herstellbar ist, die schnell und einfach mit dem Gehäusedeckel verbindbar ist.

Bei einer vorteilhaften Ausgestaltung umfasst die Auswerteeinheit Anzeigemittel und/oder Schnittstellen und/oder ist als Busteilnehmer eines Bussystems ausgebildet. Von Vorteil ist dabei, dass eine Übermittelung der detektierten Informationen an einen zentralen Rechner vorsehbar ist.

Der Gehäusedeckel umfasst eine Ausnehmung für einen Sensor. Von Vorteil ist dabei, dass der Sensor geschützt vorsehbar ist.

Weitere Vorteile ergeben sich aus den Unteransprüchen.

Die Erfindung wird nun anhand von Abbildungen näher erläutert:

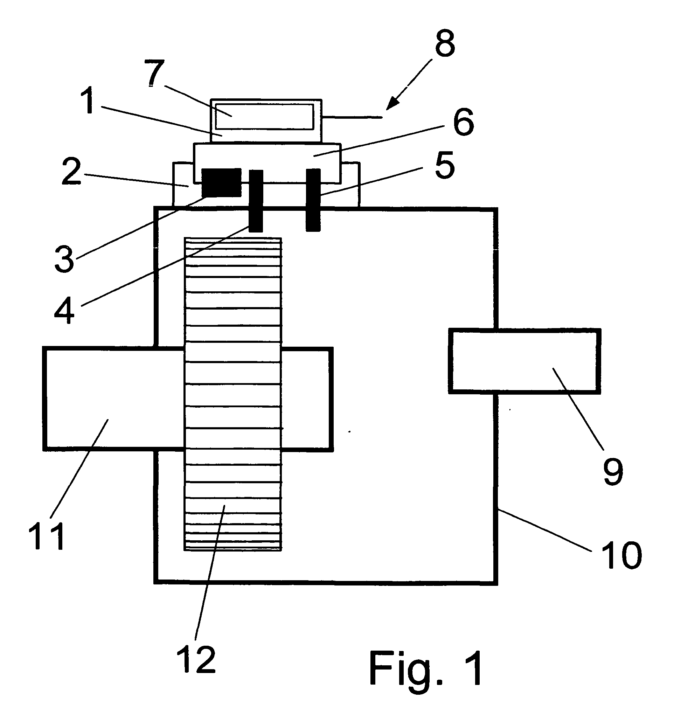

In der Figur 1 ist ein erfindungsgemäßes Getriebe symbolisch skizziert, wobei nur das Endrad als Verzahnungsteil 12 gezeigt ist und auch Zwischenwellen nicht gezeigt sind.

Das Zahnrad 12 ist mit der Abtriebswelle 11 formschlüssig verbunden, insbesondere drehfest mittels Passfederverbindung. Abtriebswelle 11 und Eintriebswelle 9 sind über Lager im Getriebegehäuse 10 gelagert.

Das Getriebegehäuse 10 weist eine Ausnehmung auf, durch die das Verzahnungsteil 12 einführbar und somit montierbar ist. Diese Ausnehmung ist verschließbar, indem der Deckel 2 mit dem Getriebegehäuse verbunden wird. Vorzugsweise werden hierzu lösbare Verbindungen wie Schraubverbindungen vorgesehen. Außerdem ist am Deckel eine Dichtung vorgesehen, die eine Verbindung in hoher Schutzart ermöglicht und ein Austreten von Schmierstoff des Getriebes verhindert.

Statt eines einfachen nur Verschlussfunktion ausübenden Deckels ist in Figur 1 ein spezieller Deckel 2 gezeigt, auf dem von der Außenseite her eine Sensoreinheit 6 verbindbar ist, an die eine Auswerteeinheit 1 angeschlossen ist mit Anzeigemittel 7 und einer Schnittstelle 8, wie Feldbusschnittstelle, und Ausgängen.

Die Auswerteeinheit 1 ist mit den Sensoren verbunden und wertet die Sensorsignale der Sensoren aus. Als Sensoren sind beispielhaft ein Schwingungssensor 3 gezeigt, der als Beschleunigungssensor ausbildbar ist und Schwingungen, wie beispielsweise Körperschall, detektiert. Auf diese Weise ist ein Überwachen des Zustandes der Lager und der Verzahnungen der Verzahnungsteile des Getriebes ermöglicht. Der Deckel 2 weist zum Verbinden mit dem Schwingungssensor eine bearbeitete Fläche auf, auf die der Sensor in Kontakt bringbar ist, insbesondere mit einer hohen Andruckkraft zur Erreichung eines geringen Signalverlustes.

Als weiterer Sensor ist ein Induktiv-Näherungssensor 4 gezeigt, der auf die Verzahnung des Zahnrades 12 gerichtet vorgesehen ist. Auf diese Weise ist es der Auswerteeinheit ermöglicht, die Drehzahl des Verzahnungsteiles zu bestimmen. Der Deckel 2 weist eine Ausnehmung auf zur Durchführung des Induktiv-Näherungssensors 4 auf, in der dieser dicht verbunden ist. Über die Drehzahl hinaus sind auch die insgesamt zurückgelegte Winkelstrecke, Anzahl der Gesamtumdrehungen oder dergleichen bestimmbar. Mit den von der Auswerteeinheit bestimmten Werten ist eine Prozesssteuerung ausführbar, wobei der das Getriebe antreibende Elektromotor als Stellglied verwendbar Ist.

Des Weiteren ist ein Temperatursensor 5 vorgesehen, der ebenfalls in einer Ausnehmung des Deckels 2 vorgesehen ist und die Temperatur einer Komponente, wie Verzahnung eines Verzahnungsteils oder Schmierstoff, des Getriebes detektiert. Vorzugsweise ist der Temperatursensor 5 als Infrarotsensor ausgeführt und ist somit in der Lage, trotz der großen Entfernung zum unten im Getriebe sich vorzugsweise ansammelnden Schmierstoffes, wie beispielsweise Schmieröl, die Temperatur des Schmierstoffes zu detektieren. Alternativ ist der Temperatursensor als langer Stab ausgeführt und reicht somit vom oben montierten Deckel 2 bis zum im Getriebe unten liegenden Ölsumpf. Im letztgenannten Fall ist die Temperatur auch in kostengünstiger Weise durch Bestimmen des ohmschen Widerstandes eines Sensormaterials feststellbar, wobei dieses Sensormaterial in thermischen Kontakt gebracht ist mit dem Schmierstoff des Getriebes.

Mittels der die Sensoren aufnehmenden Sensoreinheit 6, an der die Auswerteeinheit 1 verbunden ist, ist eine schnelle und einfache Herstellung ermöglicht, insbesondere ein schnelles und einfaches Verbinden der Sensoren mit dem Deckel 2. Dabei ist der Deckel 2 beispielsweise aus Aluminium-Druckguss oder Stahlguss hergestellt und die Sensoreinheit beispielsweise aus Kunststoff.

Weitere Sensoren sind an der Sensoreinheit vorsehbar.

Beispielhaft ist ein Drehmomentsensor vorsehbar, der mittels eines an einer Welle oder an einem Verzahnungsteil angebrachten dehnungssensitiven Elements, wie Dehnungsmessstreifen DMS oder OFW-Sensor, die Torsion detektiert. Die berührungslose Abfrage des Drehmomentsensors ermöglicht eine Platzierung des Drehmomentsensors am drehenden Teil. Zur berührungslosen Übertragung der Sensorsignale ist bei DMS eine induktive Kopplung vorteilhaft, wobei die Signale des Sensors auf die Primärwicklung geleitet werden und die an der stationär am Deckel 2 oder Getriebegehäuse vorgesehenen Sekundärwicklung auftretende Spannung der Auswerteeinheit zugeführt werden. Zur berührungslosen Übertragung der Sensorsignale ist bei OFW am Deckel eine Antenne zum Senden der Abfragepulse und Empfangen der Antwortsignale vorgesehen. Somit sind sogar mehrere OFW-Sensoren im Getriebeinneren vorsehbar, deren Signale eineindeutig über eine Identifizierungsinformation zuordenbar sind.

Mittels der Drehmomentsensoren ist eine Prozesssteuerung, eine Überwachung auf Überschreitung des maximal zulässigen Drehmoments und eine sonstige Zustandsüberwachung des Getriebes ermöglicht, insbesondere durch die Auswerteeinheit.

Statt der OFW oder DMS Sensoren sind auch geeignete Magnetisierungen am Verzahnungsteil oder an einer Welle des Getriebes vorsehbar, die mittels magnetfeldsensitiver Sensoren detektierbar sind und auf diese Weise das Drehmoment bestimmbar ist.

Des Weiteren ist als Sensor ein Ölzustandssensor vorsehbar, aus dessen Signalen die Auswerteeinheit einen Ölwechselanzeigewert bestimmt, also die Anzeige der Auswerteeinheit eine Information anzeigt über das Notwendigwerden eines Ölwechsels für das Getriebe.

Als weiterer Sensor ist ein Sensor zur Detektion des Ölstandes vorsehbar.

Darüber hinaus ist auch ein Sensor vorsehbar, der eine Verschiebung einer Komponente des Getriebes, beispielsweise einer Welle oder eines Verzahnungsteils detektiert. Beispielsweise ist hierzu ein induktiver Abstandssensor verwendbar, der den Wellenorbit, also das vom Material der Welle eingenommene Volumen überwacht. Wird von diesem Abstandssensor eine Schwankung des Abstandes der Weile bestimmt, lässt dies auf einen Lagerverschleiß schließen. Insbesondere wenn der Zeitverlauf der Schwankung mit der Drehzahl der Welle korreliert, ist eine fehlersichere Detektion des Lagerverschleißes ausgeführt. Die Korrelation wird dabei von der Auswerteeinheit bestimmt, der auch eine Information über die Drehzahl zugeführt wird, beispielsweise mittels eines induktiven Sensors, der auf die Zähne eines Verzahnungsteils gerichtet ist. In Weiterbildung Ist es sogar ermöglicht aus nur dem Sensorsignal dieses letztgenannten Sensors auf den Lagerverschleiß zu schließen, indem dieses Signal auf eine Korrelation zweier Frequenzanteile überwacht wird, die sich nur um einen ganzzahligen Faktor, der der Zähnezahl des Zahnrades entspricht, unterscheiden.

Die Auswerteeinheit umfasst auch einen Zeitgeber, wie Quartz-Schwingkreis und/oder integrierte Uhr, mit dessen Zeitinformation die oben genannten Bestimmungen ausgeführt werden.

In einer weiteren vorteilhaften Ausgestaltung ist die Auswerteeinheit aus einer Verlustenergie des Getriebes versorgt, wie beispielsweise durch ein Peltier-Element, durch das die an die Umgebung abzuführende Wärme geleitet wird. Alternativ ist die Versorgung aus einem in das Getriebe integrierten Generator ausgeführt, beispielsweise indem auf dem drehenden Teile ein Magnet oder eine Magnetisierung vorgesehen wird und eine Spulenwicklung um diesen magnetisierten Bereich vorgesehen wird, aus der die Auswerteeinheit versorgbar ist.

In einer weiteren vorteilhaften Ausgestaltung umfasst die Auswerteeinheit Eingabemittel, über die Parameter eingebbar sind. Schnittstellen sind ebenfalls von der Auswerteeinheit umfasst. Darüber hinaus ist die Auswerteeinheit auf einem Gehäuseteil des Getriebes montierbar.

Bei einem weiteren erfindungsgemäßen Ausführungsbeispiel ist die Sensoreinheit mit dem Deckel 2 einstückig ausgebildet.

Bei einem weiteren erfindungsgemaßen Ausführungsbeispiel ist die Auswerteeinheit 1 mit der Sensoreinheit 6 und/oder mit dem Deckel 2 einstückig ausgebildet.

Bei einem weiteren erfindungsgemäßen Ausführungsbeispiel werden OFW-Sensoren auch zur Temperaturerfassung und zur Erfassung anderer physikalischer Größen des Getriebes eingesetzt. Dabei ist das Antwortsignal jedes Sensors mittels einer Identifizierungsinformation eineindeutig zuordenbar. Bei diesem Ausführungsbeispiel muss also im Deckel 2 nur eine Ausnehmung zur Durchführung der Antenne vorgesehen werden.

### Bezugszeichenliste

- 1: Auswerteeinheit
- 2: Deckel
- 3: Schwingungssensor
- 4: Induktiv-Näherungssensor
- 5: Temperatursensor
- 6: Sensoreinheit
- 7: Anzeigemittel
- 8: Schnittstelle, Ausgänge
- 9: Eintriebswelle des Getriebes
- 10: Getriebegehäuse
- 11: Abtriebswelle
- 12: Verzahnungsteil, insbesondere Zahnrad

## Patentansprüche

1. System mit Getriebe,
wobei das Getriebe zumindest einen Gehäusedeckel (2) umfasst,
wobei am Gehäusedeckel (2) eine Sensoreinheit (6) vorgesehen ist, an der Sensoren in entsprechenden Aufnahmen aufgenommen sind, wobei
die Sensoren zumindest elektrisch mit einer Auswerteeinheit (1) verbunden sind,
**dadurch gekennzeichnet, dass**
- ein erster Sensor ein Schwingungssensor (3),
- ein weiterer Sensor ein Öltemperatursensor (5) und/oder ein Ölalterungssensor,
- ein weiterer Sensor ein Drehmomentsensor oder
- ein weiterer Sensor ein Ölstandsensor
ist,
wobei die Sensoreinheit (6) an der der Umgebung zugewandten Seite des Gehäusedeckels (2) mit diesem verbunden ist oder die Sensoreinheit (6) mit dem Gehäusedeckel (2) einstückig ausgebildet Ist,
wobei an die Sensoreinheit (6) die Auswerteeinheit (1) angeschlossen ist, welche ein Anzeigemittel (7) eine Schnittstelle (8), wie Feldbusschnittstelle, und Ausgänge aufweist,
wobei der Gehäusedeckel (2) eine Ausnehmung für einen Sensor umfasst,
wobei der Gehäusedeckel (2) weist eine bearbeitete Fläche auf, an welcher der Schwingungssensor (3) kontaktiert ist,
wobei die Auswerteeinheit (1) mit der Sensoreinheit (6) verbunden ist auf der der Umgebung zugewandten Seite der Sensoreinheit (6).

2. System nach mindestens einem der vorangegangenen Ansprüche,
**dadurch gekennzeichnet, dass**
der Gehäusedeckel (2) eine Ausnehmung im Gehäuse oder zumindest einem Gehäuseteil des Getriebes abdeckt.

3. System nach mindestens einem der vorangegangenen Ansprüche,
**dadurch gekennzeichnet, dass**
der Gehäusedeckel (2) aus Metall ausgebildet Ist.

4. System nach Anspruch 3,
**dadurch gekennzeichnet, dass**
die Sensoreinheit (6) aus einem anderen Metall zur Abschirmung oder aus Kunststoff ausgebildet ist.

5. System nach mindestens einem der vorangegangenen Ansprüche,
**dadurch gekennzeichnet, dass**
die Auswerteeinheit (1) mit der Sensoreinheit (6) einstückig ausgebildet ist.

6. System nach mindestens einem der vorangegangenen Ansprüche,
**dadurch gekennzeichnet, dass**
Sensor der erste zur Detektion von von Lagern und/oder Verzahnungsteilen (12) erzeugtem Körperschall, verwendet wird.

7. System nach mindestens einem der vorangegangenen Ansprüche,
**dadurch gekennzeichnet, dass**
ein weiterer Sensor ein Induktiv-Näherungssensor ist, insbesondere zur Bestimmung der Drehung eines Verzahnungsteils (12).

8. System nach mindestens einem der vorangegangenen Ansprüche,
**dadurch gekennzeichnet, dass**
ein weiterer Sensor ein Ölzustandssensor, insbesondere als Infrarotsensor ausgeführt, ist, insbesondere zur Bestimmung des Zustandes des Schmieröls des Getriebes.

9. System nach mindestens einem der vorangegangenen Ansprüche,
**dadurch gekennzeichnet, dass** der
Drehmomentsensor als OFW oder DMS-Sensor ausgeführt, ist, insbesondere zur Bestimmung des mittels einer Welle des Getriebes durchgeleiteten Drehmoments.

10. System nach mindestens einem der vorangegangenen Ansprüche,
**dadurch gekennzeichnet, dass**
ein weiterer Sensor vorgesehen ist, der eine Verschiebung einer Komponente des Getriebes bestimmt.

11. System nach mindestens einem der vorangegangenen Ansprüche,
**dadurch gekennzeichnet, dass**
die Auswerteeinheit (1) einen Zeitgeber umfasst, insbesondere Schwingquartz.

12. System nach mindestens einem der vorangegangenen Ansprüche,
**dadurch gekennzeichnet, dass**
die Auswerteeinheit (1) mit der Sensoreinheit (6) einstückig ausgebildet ist

13. System nach mindestens einem der vorangegangenen Ansprüche,
**dadurch gekennzeichnet, dass**
die Auswerteeinheit (1) Anzeigemittel (7) umfasst oder als Busteilnehmer eines Bussystems ausgebildet ist.

14. System nach mindestens einem der vorangegangenen Ansprüche,
**dadurch gekennzeichnet, dass**
die Auswerteeinheit (1) aus einer Verlustenergie des Getriebes versorgt ist,
insbesondere
- durch ein Peltier-Element, durch das die an die Umgebung abzuführende Wärme geleitet wird, oder
- durch ein aus einem in das Getriebe integrierten Generator, Insbesondere wobei auf dem drehenden Telle ein Magnet oder eine Magnetisierung vorgesehen wird und eine mit diesem Magnet oder der Magnetisierung zusammenwirkende Spulenwicklung, aus welcher die Auswerteeinheit (1) versorgbar ist.

## Claims

1. System having gearing,
wherein the gearing comprises at least one housing cover (2),
wherein a sensor unit (6) is provided on the housing cover (2), on which sensor unit sensors are accommodated in corresponding receptacles,
wherein the sensors are connected at least electrically to an evaluation unit (1),
**characterised in that**
- a first sensor is a vibration sensor (3),
- a further sensor is an oil-temperature sensor (5) and/or an oil-ageing sensor,
- a further sensor is a torque sensor or
- a further sensor is an oil-level sensor,
wherein the sensor unit (6) is connected to the housing cover (2) on the side of the housing cover facing the surroundings, or the sensor unit (6) is formed in one piece with the housing cover (2),
wherein the evaluation unit (1) is connected to the sensor unit (6) and has a display means (7), an interface (8), such as a field-bus interface, and outputs,
wherein the housing cover (2) comprises a cutout for a sensor,
wherein the housing cover (2) has a machined surface, on which the vibration sensor (3) is contacted,
wherein the evaluation unit (1) is connected to the sensor unit (6) on the side of the sensor unit (6) facing the surroundings.

2. System according to at least one of the preceding claims,
**characterised in that**
the housing cover (2) covers a cutout in the housing or in at least one housing part of the gearing.

3. System according to at least one of the preceding claims,
**characterised in that**
the housing cover (2) is formed from metal.

4. System according to Claim 3,
**characterised in that**
the sensor unit (6) is formed from a different metal for shielding or from plastic.

5. System according to at least one of the preceding claims,
**characterised in that**
the evaluation unit (1) is formed in one piece with the sensor unit (6).

6. System according to at least one of the preceding claims,
**characterised in that**
the first sensor is used to detect structure-borne noise generated by bearings and/or toothing parts (12).

7. System according to at least one of the preceding claims,
**characterised in that**
a further sensor is an inductive proximity sensor, in particular for determining the rotation of a toothing part (12).

8. System according to at least one of the preceding claims,
**characterised in that**
a further sensor is an oil-condition sensor, in particular in the form of an infrared sensor, in particular for determining the condition of the lubricating oil of the gearing.

9. System according to at least one of the preceding claims,
**characterised in that**
the torque sensor is in the form of a surface-acoustic-wave or strain-gauge sensor, in particular for determining the torque transmitted by means of a shaft of the gearing.

10. System according to at least one of the preceding claims,
**characterised in that**
a further sensor is provided, which determines a displacement of a component of the gearing.

11. System according to at least one of the preceding claims,
**characterised in that**
the evaluation unit (1) comprises a timing element, in particular a quartz-crystal oscillator.

12. System according to at least one of the preceding claims,
**characterised in that**
the evaluation unit (1) is formed in one piece with the sensor unit (6).

13. System according to at least one of the preceding claims,
**characterised in that**
the evaluation unit (1) comprises display means (7) or is formed as a node of a bus system.

14. System according to at least one of the preceding claims,
**characterised in that**
the evaluation unit (1) is supplied from energy dissipated from the gearing,
in particular
- by a Peltier element, through which the heat to be dissipated to the surroundings is conducted, or
- by a generator integrated into the gearing, in particular wherein a magnet or a magnetisation is provided on the rotating part, and a coil winding cooperating with this magnet or the magnetisation, from which the evaluation unit (1) is able to be supplied.

## Revendications

1. Système comprenant une transmission,
ladite transmission étant munie d'au moins un couvercle (2) de carter,
une unité de détection (6), sur laquelle des capteurs sont reçus dans des logements correspondants, étant prévue sur ledit couvercle (2) du carter,
lesquels capteurs sont connectés au moins électriquement à une unité d'interprétation (1), **caractérisé par le fait**
- **qu'**un premier capteur est un capteur (3) de vibrations,
- **qu'**un autre capteur est un capteur (5) de températures d'huile et/ou un capteur de vieillissement d'huile,
- **qu'**un autre capteur est un capteur de couples de rotation, ou
- **qu'**un autre capteur est un capteur de niveaux d'huile,
sachant que l'unité de détection (6) est reliée au couvercle du carter du côté dudit couvercle (2) qui est tourné vers l'espace environnant, ou que ladite unité de détection (6) est réalisée d'un seul tenant avec ledit couvercle (2) du carter,
sachant que l'unité d'interprétation (1) est raccordée à l'unité de détection (6) et comporte un moyen d'affichage (7), un interface (8) tel qu'un interface de bus de terrain, et des sorties,
sachant que le couvercle (2) du carter présente un évidement assigné à un capteur, sachant que ledit couvercle (2) du carter est pourvu d'une surface usinée avec laquelle le capteur (3) de vibrations est en contact,
sachant que l'unité d'interprétation (1) est raccordée à l'unité de détection (6) du côté de ladite unité de détection (6) qui est tourné vers l'espace environnant.

2. Système selon au moins l'une des revendications précédentes,
**caractérisé par le fait que**
le couvercle (2) du carter recouvre un évidement pratiqué dans ledit carter, ou dans au moins une partie du carter de la transmission.

3. Système selon au moins l'une des revendications précédentes,
**caractérisé par le fait que**
le couvercle (2) du carter est réalisé en métal.

4. Système selon la revendication 3,
**caractérisé par le fait que**
l'unité de détection (6) est réalisée en un autre métal dévolu au blindage de protection, ou en matière plastique.

5. Système selon au moins l'une des revendications précédentes,
**caractérisé par le fait que**
l'unité d'interprétation (1) est réalisée d'un seul tenant avec l'unité de détection (6).

6. Système selon au moins l'une des revendications précédentes,
**caractérisé par le fait que**
le premier capteur est utilisé en vue de la détection de bruits de structure engendrés par des paliers et/ou par des pièces dentées (12).

7. Système selon au moins l'une des revendications précédentes,
**caractérisé par le fait**
**qu'**un autre capteur est un capteur inductif de proximité affecté, en particulier, à la détermination de la rotation d'une pièce dentée (12).

8. Système selon au moins l'une des revendications précédentes,
**caractérisé par le fait**
**qu'**un autre capteur est un capteur de niveaux d'huile, notamment réalisé sous la forme d'un capteur infrarouge affecté, en particulier, à la détermination de l'état de l'huile de lubrification de la transmission.

9. Système selon au moins l'une des revendications précédentes,
**caractérisé par le fait que**
le capteur de couples de rotation est réalisé sous la forme d'un capteur à ondes acoustiques de surface ou à extensomètres, notamment affecté à la détermination du couple de rotation répercuté au moyen d'un arbre de la transmission.

10. Système selon au moins l'une des revendications précédentes,
**caractérisé par le fait**
**qu'**il est prévu un autre capteur déterminant un déplacement d'un élément structurel de la transmission.

11. Système selon au moins l'une des revendications précédentes,
**caractérisé par le fait que**
l'unité d'interprétation (1) inclut une minuterie, en particulier un quartz oscillant.

12. Système selon au moins l'une des revendications précédentes,
**caractérisé par le fait que**
l'unité d'interprétation (1) est réalisée d'un seul tenant avec l'unité de détection (6).

13. Système selon au moins l'une des revendications précédentes,
**caractérisé par le fait que**
l'unité d'interprétation (1) inclut des moyens d'affichage (7), ou est réalisée sous la forme d'un usager d'un système de bus.

14. Système selon au moins l'une des revendications précédentes,
**caractérisé par le fait que**
l'unité d'interprétation (1) est alimentée à partir d'une énergie de déperdition de la transmission, en particulier
- par l'intermédiaire d'un élément de Peltier guidant la chaleur devant être cédée à l'espace environnant, ou
- à partir d'un générateur intégré dans la transmission, notamment en prévoyant un aimant ou une magnétisation sur la pièce rotative et un bobinage qui coopère avec cet aimant ou avec la magnétisation, et à partir duquel ladite unité d'interprétation (1) peut être alimentée.
